# EUROPEAN PATENT APPLICATION

(11) **EP 1 701 541 A1**
(43) Date of publication of application: **13.09.2006**
(21) Application number: 06110290.1
(22) Date of filing: 22.02.2006
(51) Int. Cl.: H04N 5/64

(54) **A Casing for a Display Apparatus**

(30) Priority: 08.03.2005 KR 2005018980
(71) Applicant: SAMSUNG ELECTRONICS CO., LTD., Suwon-si Gyeonggi-do 442-742 (KR)
(72) Inventor: Lee, Weon-hee, Suwon-si Gyeonggi-do (KR)
(74) Representative: Jackson, Jonathan Andrew

(57) **Abstract**

The invention relates to a display apparatus that includes a casing, a cathode ray tube provided in the casing, a plurality of PCBs provided in the casing; and a substrate bracket provided in the casing to mount the PCBs in a stack. Thus, the present invention provides a display apparatus having a compact structure, which increases room utilization.

## Description

The present invention relates to a casing for and an associated display apparatus.

Conventionally, a display apparatus refers to an electronic instrument that visually displays data on a screen, such as a computer monitor, a television, etc.

Although a display apparatus using a CRT (Cathode Ray Tube) has a larger structure than a flat panel display apparatus, such displays are widely used because they display images with high quality. The CRT is typically divided into a CDT-type (colour display tube), which may be used with a computer monitor, and a CPT-type (colour picture tube), which may be used with a television.

A conventional CRT display apparatus includes a casing, a CRT provided in the casing, and a plurality of PCBs (printed circuit board) also provided in the casing. However, the PCBs are mounted on the bottom of the casing as a plate structure in conventional CRT apparatuses, thereby decreasing utilization because the PCBs are not compactly arranged, which increases the size of the casing.

The present invention provides a display apparatus having a compact design that decreases a size of a casing.

Additional features of the invention will be set forth in the description which follows, and in part will be apparent from the description, or may be learned by practice of the invention.

According to a first aspect of the invention, there is provided a casing for a cathode ray tube display apparatus comprising bracket means configured to mount thereon a plurality of printed circuit boards in a stack.

According to another aspect, there is provided a display apparatus comprising a casing according to the first aspect, a cathode ray tube mounted in the casing and a plurality of printed circuited boards mounted in the bracket means.

The present invention also discloses a display apparatus, including a casing; a cathode ray tube provided in the casing; a plurality of PCBs provided in the casing; and a bracket provided in the casing to mount the PCBs in a stack.

It is to be understood that both the foregoing general description and the following detailed description are exemplary and explanatory and are intended to provide further explanation of the invention as claimed.

An embodiment of the present invention will now be described, by way of example only, and with reference to the accompanying drawings, in which:
Figure 1 is a perspective view of a display apparatus according to an embodiment of the invention.
Figure 2 is an exploded perspective view of the display apparatus according to an embodiment of the invention.
Figure 3 is a perspective view showing a mounting structure of a PCB according to an embodiment of the invention.
Figure 4 is a sectional view showing the mounting structure of the PCB according to an embodiment of the invention.

This invention may be embodied in many different forms and should not be construed as limited to the embodiments set forth herein. Rather, these embodiments are provided so that this disclosure is thorough, and will fully convey the invention to those skilled in the art. In the drawings, the size and relative sizes of layers and regions may be exaggerated for clarity.

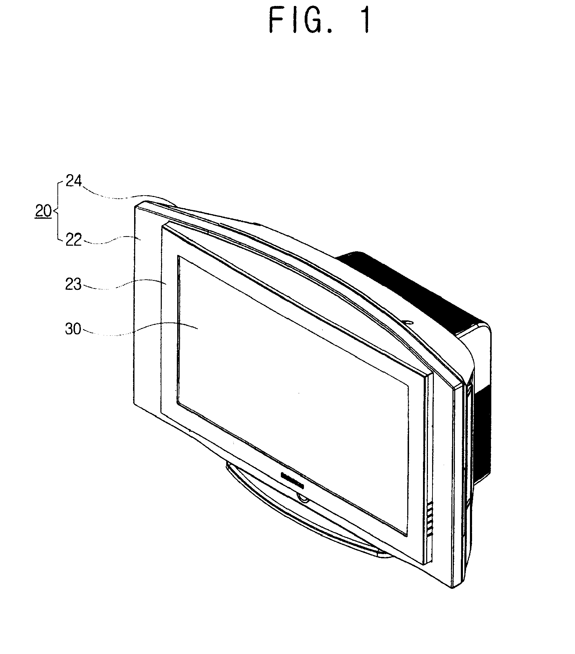

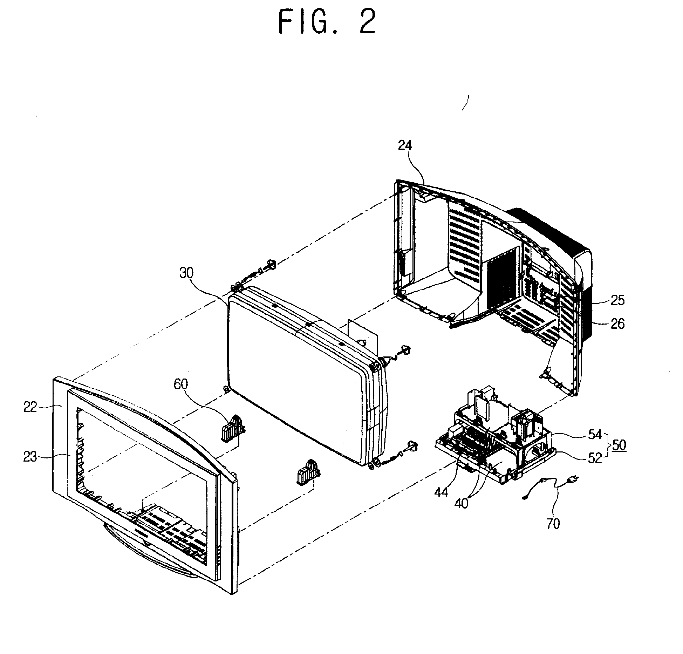

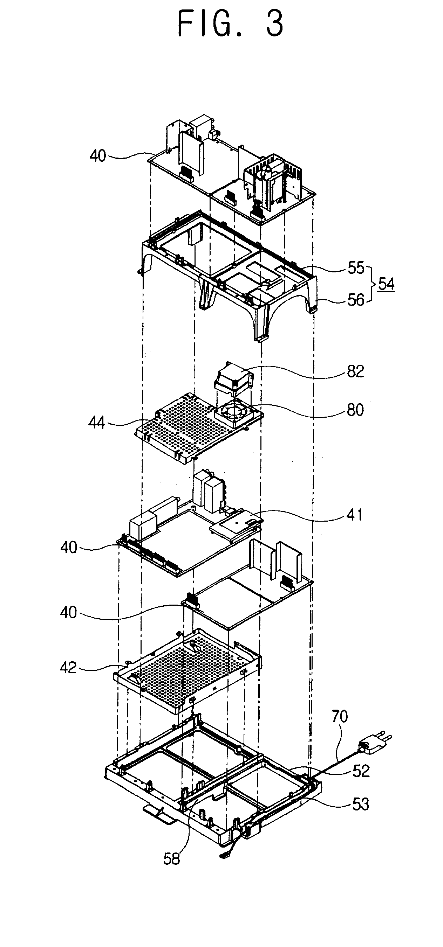

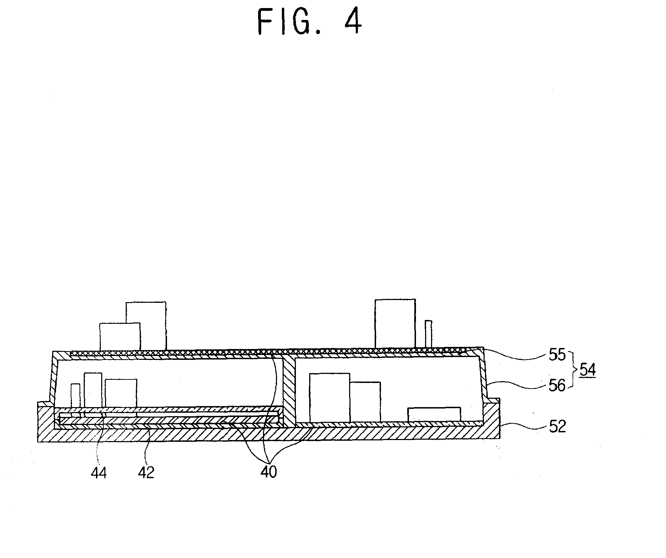

As shown in Figures 1, 2, 3, and 4, a display apparatus according to an embodiment of the invention includes a casing 20 forming an appearance of the display apparatus; a cathode ray tube 30 provided in the casing 20 for displaying images; a plurality of PCBs 40 provided in the casing 20; and a substrate bracket 50 provided in the casing 20 and mounting the PCBs 40.

The substrate bracket 50 is a structure that holds the PCBs 40. The substrate bracket 50 may be a support, a fixture, a fastener, and the like. The substrate bracket 50 may be made of any material that enables the substrate bracket 50 to mount or hold the PCBs in the casing and may project or extend from the casing.

The casing 20 includes a front cover 22 provided adjacent to, for example, in front of, the cathode ray tube 30 and having an opening in a substantially middle portion thereof to expose the cathode ray tube 30 to the outside as well as a rear cover 24 provided in a rear of the cathode ray tube 30 which is coupled with the front cover 22. A cover mask 23 having a substantially rectangular shape is coupled with a front portion of the front cover 22. The rear cover 24 may be formed with an air outlet 25 and a POD (Point Of Deployment) card insert hole 26.

The cathode ray tube 30 of the present invention has a thinner structure as compared with conventional cathode ray tube structures. The cathode ray tube 30 is spaced from a bottom of the casing 20 by a predetermined distance and is coupled with the casing 20. It is understood that the cathode ray tube 30 is not limited to the configurations discussed above.

A pair of supporting members 60 spaced at a predetermined distance so as to stably support the cathode ray tube 30 is provided between the bottom of the casing 20 and a lower portion of the cathode ray tube 30.

The PCBs 40 may be a power PCB, a system PCB, a deflection PCB etc. Each PCB includes circuit components, such as an integrated circuit etc.

The substrate bracket 50 mounts to stack the PCBs 40, thereby increasing the functionality of the display apparatus for utilization purposes in a room and decreases the size of the casing 20. The substrate bracket 50 includes a first bracket 52 provided in the bottom of the casing 20 and mounting the PCBs 40, and a second bracket 54 detachably coupled with an upper side of the first bracket 52 and mounting the PCBs 40. For example, some PCBs 40 may be provided in the first bracket 52 and other PCBs 40 may be provided in the second bracket 54 in a stack-like structure. It is understood that the substrate bracket may include additional brackets and is not limited to having only the first bracket 52 and the second bracket 54.

The first bracket 52 may be formed with a support 53 to accommodate and support a power cable 70 or wire.

The second bracket 54 includes a base 55 that is spaced from the first bracket 52 at a predetermined distance. The PCBs 40 are mounted or attached with an upper portion of the base 55 and a supporting rib 56 that extends downward from a perimeter area of the base 55 and is coupled with the first bracket 52. The supporting rib 56 may include at least one projection that extends between the first bracket 52 and the second bracket 56. The supporting rib 56 is a spacer, flange, projection, or the like.

The supporting rib 56 provides space so that at least one of the PCBs 40 may be mounted on the first bracket 52. The structure of the supporting rib 56 may be variously changed so that the PCBs 40 may be mounted on the first bracket 52.

The first bracket 52 may include a divisional partition 58 to divide and mount multiple, for example, two, PCBs 40. Alternatively, the second bracket 54 may be formed with the same divisional partition 58.

The embodiments of the present invention describes the substrate bracket 50 having two layers structure. It is understood that the substrate bracket 50 may have a multi-layered structure with more than two layers.

One of the PCBs 40 may include a POD card-mounting part 41 mounting a POD card (not shown) that is inserted through a POD card insert hole 26 formed in the rear cover 24. A POD fan 80 may be mounted or attached on an upper side of the POD card-mounting part 41 to discharge heat generated from the POD card (not shown) to the outside.

An upper portion of the POD fan 80 is coupled with a guide part 82 that guides the heat ventilated via the POD fan 80 to an air outlet 25 formed in the rear cover 24.

Reference members 42 and 44 respectively indicate a shield case and a shield cover.

It will be apparent to those skilled in the art that various modifications and variation can be made in the present invention without departing from the scope of the invention which is defined by the claims.

## Claims

1. A casing (20) for a cathode ray tube display apparatus comprising bracket means (50) configured to mount thereon or therein a plurality of printed circuit boards (40) in a stack.

2. A display apparatus comprising a casing (20) according to claim 1, a cathode ray tube (30) mounted in the casing (30) and a plurality of printed circuited boards (40) mounted in the bracket means (50).

3. A display apparatus, comprising:
a casing;
a cathode ray tube provided in the casing;
a plurality of printed circuit boards (PCBs) provided in the casing; and
a bracket provided in the casing to mount the PCBs in a stack.

4. The display apparatus of claim 3, wherein the bracket comprises:
a first bracket provided on a bottom of the casing; and
a second bracket detachably coupled with the first bracket.

5. The display apparatus of claim 4, wherein the second bracket comprises:
a base that is spaced from the first bracket at a predetermined distance; and
a spacer that extends from the base and is coupled with the first bracket.

6. The display apparatus of claim 5, wherein at least one of the first bracket and the second bracket comprises a divisional partition to divide and mount the PCBs.

7. The display apparatus of claim 4, wherein at least one of the first bracket and the second bracket comprises a divisional partition to divide and mount the PCBs.

8. The display apparatus of claim 4, further comprising:
at least one spacer provided between the first bracket and the second bracket to provide a space for the PCBs.
